# EUROPÄISCHE PATENTSCHRIFT

(11) **EP 4 158 234 B1**
(45) Veröffentlichungstag und Bekanntmachung des Hinweises auf die Patenterteilung: **22.05.2024**
(21) Anmeldenummer: 21732168.6
(22) Anmeldetag: 27.05.2021
(51) Int. Cl.: F16L 37/088

(54) **STECKVERBINDER ZUM VERBINDEN VON LEITUNGEN FÜR FLÜSSIGE ODER GASFÖRMIGE MEDIEN**
PLUG-IN CONNECTOR FOR CONNECTING PIPES FOR LIQUID OR GASEOUS MEDIA
CONNECTEUR ENFICHABLE POUR CONNECTER DES TUYAUX POUR DES MILIEUX LIQUIDES OU GAZEUX

(30) Priorität: 27.05.2020 AT 504612020
(43) Veröffentlichungstag der Anmeldung: 05.04.2023
(73) Patentinhaber: Henn GmbH & Co KG., 6850 Dornbirn (AT)
(72) Erfinder: HARTMANN, Harald, 6850 Dornbirn (AT)
(74) Vertreter: Burger, Hannes
(86) Internationale Anmeldenummer: PCT/AT2021/060181
(87) Internationale Veröffentlichungsnummer: WO 2021/237261

(56) Entgegenhaltungen:
- US-A1- 2019 242 508
- US-B2- 10 550 982

## Beschreibung

Die Erfindung betrifft einen Steckverbinder zum Verbinden von Leitungen für flüssige oder gasförmige Medien, sowie ein Verfahren zum Herstellen einer Steckverbindung zwischen dem Steckverbinder und einem Gegensteckverbinder.

Aus der WO 2018/144902 A1, der WO 2018/102213 A1 und der EP 3 179 148 A1 sind diverse Steckverbinder bekannt. Die aus diesen Dokumenten bekannten Steckverbinder weisen den Nachteil auf, dass nicht eindeutig festzustellen ist, ob die Steckverbinder richtig miteinander gefügt sind. Aus der US 10 550 982 B2 ist ein Steckverbinder bekannt, bei dem ein Anzeigeelement manuell in eine die korrekte Verriegelung anzeigende Position geschoben werden kann.

Aufgabe der vorliegenden Erfindung war es, die Nachteile des Standes der Technik zu überwinden und einen Steckverbinder und ein Verfahren zum Herstellen einer Steckverbindung zwischen dem Steckverbinder und einem Gegensteckverbinder zur Verfügung zu stellen, welche die Kontrollierbarkeit der korrekten Verbindung verbessern.

Diese Aufgabe wird durch eine Vorrichtung und ein Verfahren gemäß den Ansprüchen gelöst. Erfindungsgemäß ist ein Steckverbinder zum Verbinden von Leitungen für flüssige oder gasförmige Medien ausgebildet. Der Steckverbinder umfasst
- einen Verbinderkörper, welcher zumindest einen ersten Mantelabschnitt aufweist, welcher einen Aufnahmeraum zur Aufnahme eines Teils eines Gegensteckverbinders bildet, wobei im ersten Mantelabschnitt zumindest zwei Durchtrittsöffnungen ausgebildet sind;
- ein Arretierungselement, welches zum Sichern des Steckverbinders relativ zum Gegensteckverbinder vorgesehen ist, wobei die Durchtrittsöffnungen im Verbinderkörper zur Aufnahme des Arretierungselementes dienen. Weiters ist ein Anzeigeelement ausgebildet, welches eine Anzeigefläche aufweist, wobei das Anzeigeelement einen ersten Teilabschnitt und einen zweiten Teilabschnitt aufweist, wobei der erste Teilabschnitt und der zweite Teilabschnitt durch einen Federabschnitt flexibel miteinander gekoppelt sind, wobei der erste Teilabschnitt fest mit dem Arretierungselement verbunden ist und die Anzeigefläche am zweiten Teilabschnitt ausgebildet ist, wobei das Anzeigeelement derart ausgebildet ist, dass in einer Arretierposition, und gleichzeitig richtiger Positionierung des Gegensteckverbinders, des Arretierungselementes der zweite Teilabschnitt relativ zum ersten Teilabschnitt verformt ist, sodass die Anzeigefläche in eine Anzeigeposition gedrückt ist.

Der erfindungsgemäße Steckverbinder bringt den Vorteil mit sich, dass durch die erfindungsgemäße Ausbildung des Anzeigeelementes eindeutig erkannt werden kann, ob der Steckverbinder korrekt in den Gegensteckverbinder eingesteckt ist und ob das Arretierungselement korrekt arretiert ist.

Weiters kann es zweckmäßig sein, wenn das Arretierungselement in der Arretierposition in eine Sicherungsnut des Gegensteckverbinders eingreift, wobei der zweite Teilabschnitt des Anzeigeelementes derart ausgebildet ist, dass er an einem Außenbereich der Sicherungsnut anliegt, so dass die Anzeigefläche in die Anzeigeposition gedrängt ist, wenn alle Rastbereiche des Arretierungselementes in die Sicherungsnut des Gegensteckverbinders eingreifen. Dies bringt den Vorteil mit sich, dass die korrekte Arretierung des Arretierungselementes einfach und sicher angezeigt werden kann.

Ferner kann vorgesehen sein, dass am zweiten Teilabschnitt des Anzeigeelementes eine Anlagenase ausgebildet ist, welche zur Anlage am Außenbereich der Sicherungsnut dient. Durch eine derartige Anlagenase kann der zweite Teilabschnitt des Anzeigeelementes sicher in seine Anzeigeposition gedrängt werden.

Darüber hinaus kann vorgesehen sein, dass eine Anzeigeelementbreite des Anzeigeelementes im Bereich der Anlagenase größer ist, als eine Nutbreite der Sicherungsnut oder dass das Anzeigeelement im Bereich der Anlagenase versetzt zur Sicherungsnut angeordnet ist. Durch diese Maßnahme kann erreicht werden, dass der zweite Teilabschnitt des Anzeigeelementes nicht in die Sicherungsnut eingebracht werden kann, wodurch ein korrektes Verschieben des zweiten Teilabschnittes des Anzeigeelementes in die Anzeigeposition erreicht werden kann.

Vorteilhaft ist auch eine Ausprägung, gemäß welcher vorgesehen sein kann, dass der erste Teilabschnitt des Anzeigeelementes an einem ersten Längsende des Arretierungselementes aufgenommen ist. Durch diese Maßnahme wird eine einfache Aufnahme des Anzeigeelementes am Arretierungselement erreicht.

Gemäß einer Weiterbildung ist es möglich, dass am ersten Längsende des Arretierungselementes ein 90°-Stück ausgebildet ist, wobei der erste Teilabschnitt des Anzeigeelementes eine Aufnahmebohrung aufweist, welche zur Aufnahme des 90°-Stückes dient und wobei der erste Teilabschnitt des Anzeigeelementes eine Aufnahmenut aufweist, welche zur Aufnahme eines ersten Schenkels des Arretierungselementes dient. Durch diese Maßnahme wird eine einfache Aufnahme des Anzeigeelementes am Arretierungselement erreicht.

Ferner kann es zweckmäßig sein, wenn das Anzeigeelement eine Codierungsfläche aufweist, welche in der Anzeigeposition des Anzeigeelementes sichtbar und in der Ruheposition des Anzeigeelementes zumindest teilweise verdeckt ist, wobei die Codierungsfläche einen maschinenlesbaren Code, wie etwa einen Data Matrix Code, aufweist. Durch diese Maßnahme kann erreicht werden, dass nicht nur eine optische Kontrolle der korrekten Positionierung durch den Maschinenbediener erfolgen kann, sondern dass auch eine maschinenlesbare Kontrolle erfolgen kann bzw. dass die Information entsprechend abgespeichert werden kann.

Weiters ist es auch denkbar, dass die Information der maschinenlesbaren Kontrolle abgespeichert wird, und dazu genutzt wird, um weitere Fertigungsschritte freizugeben bzw. diese zu verhindern. Somit kann erreicht werden, dass ein Bedienerfehler weitestgehend ausgeschlossen werden kann.

Die Anzeigefläche kann gleichzeitig als Codierungsfläche dienen. Daher kann der maschinenlesbare Code direkt an der Anzeigefläche angeordnet sein.

Insbesondere kann es vorteilhaft sein, wenn die Anzeigefläche zumindest bereichsweise in einer entsprechenden Signalfarbe, wie etwa grün ausgebildet ist und/oder dass an der Anzeigefläche ein Schriftzug, wie etwa "OK" angeordnet ist. Durch diese Maßnahme kann erreicht werden, dass auch nicht fachkundige bzw. nicht geschulte Personen eine korrekte Arretierung des Arretierungselementes bzw. eine korrekte Fügung des Gegensteckverbinders mit dem Steckverbinder visuell erkannt werden kann.

Darüber hinaus kann vorgesehen sein, dass der Federabschnitt eine Verjüngung aufweist. Die Ausbildung einer Verjüngung im Federabschnitt bringt den Vorteil mit sich, dass das Anzeigeelement genau im Bereich der Verjüngung flexibel ausgebildet ist und somit der erste Teilabschnitt relativ zum zweiten Teilabschnitt flexibel verbogen werden kann. Durch die Ausbildung des Federabschnittes kann nach Beendigung der Kraftaufbringung auf den zweiten Teilabschnitt die ursprüngliche Orientierung des ersten Teilabschnittes und des zweiten Teilabschnittes relativ zueinander wieder hergestellt werden.

Weiters kann vorgesehen sein, dass das Anzeigeelement als einteiliges Spritzgussteil ausgebildet ist. Dies bringt den Vorteil mit sich, dass das Anzeigeelement in einer industriellen Massenfertigung einfach und mit ausreichend hoher Genauigkeit hergestellt werden kann.

Erfindungsgemäß ist ein Verfahren zum Herstellen einer Steckverbindung zwischen einem Steckverbinder zum Verbinden von Leitungen für flüssige oder gasförmige Medien und einem Gegensteckverbinder vorgesehen. Dass Verfahren umfasst die Verfahrensschritte:
- bereitstellen des Steckverbinders mit einem Verbinderkörper, welcher zumindest einen ersten Mantelabschnitt aufweist, welcher einen Aufnahmeraum zur Aufnahme eines Teils des Gegensteckverbinders bildet, wobei im ersten Mantelabschnitt zumindest zwei Durchtrittsöffnungen ausgebildet sind und einem Arretierungselement, welches zum Sichern des Steckverbinders relativ zum Gegensteckverbinder vorgesehen ist, wobei die Durchtrittsöffnungen im ersten Mantelabschnitt des Verbinderkörpers zur Aufnahme des Arretierungselementes dienen;
- bereitstellen des Gegensteckverbinders;
- einstecken des Gegensteckverbinders in den Aufnahmeraum des Steckverbinders;
- sichern des Gegensteckverbinders im Aufnahmeraum des Steckverbinders mittels des Arretierungselementes.

Weiters ist ein Anzeigeelement ausgebildet, welches eine Anzeigefläche aufweist, wobei das Anzeigeelement einen ersten Teilabschnitt und einen zweiten Teilabschnitt aufweist, wobei der erste Teilabschnitt und der zweite Teilabschnitt durch einen Federabschnitt flexibel miteinander gekoppelt sind, wobei der erste Teilabschnitt fest mit dem Arretierungselement verbunden ist und die Anzeigefläche am zweiten Teilabschnitt ausgebildet ist, wobei beim Einrasten des Arretierungselementes in einer Arretierposition der zweite Teilabschnitt des Anzeigeelementes relativ zum ersten Teilabschnitt des Anzeigeelementes verformt wird, sodass die Anzeigefläche in eine Anzeigeposition gedrückt wird.

Das erfindungsgemäße Verfahren bringt den Vorteil mit sich, dass eindeutig erkannt werden kann, ob der Steckverbinder korrekt in den Gegensteckverbinder eingesteckt ist und ob das Arretierungselement korrekt arretiert ist.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Steckerbaugruppe mit einem Steckverbinder und einem distanziert davon angeordneten Gegensteckverbinder;
- Fig. 2: eine perspektivische Ansicht der Steckerbaugruppe mit dem Steckverbinder, wobei der Gegensteckverbinder im Steckverbinder aufgenommen ist;
- Fig. 3: eine perspektivische Ansicht eines Arretierungselementes und eines Anzeigeelementes;
- Fig. 4: eine Querschnittdarstellung der Steckerbaugruppe ohne Gegensteckverbinder;
- Fig. 5: eine Querschnittdarstellung der Steckerbaugruppe mit darin eingestecktem Gegensteckverbinder;
- Fig. 6: eine Seitenansicht der Steckerbaugruppe ohne Gegensteckverbinder;
- Fig. 7: eine Seitenansicht der Steckerbaugruppe mit darin eingestecktem Gegensteckverbinder.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

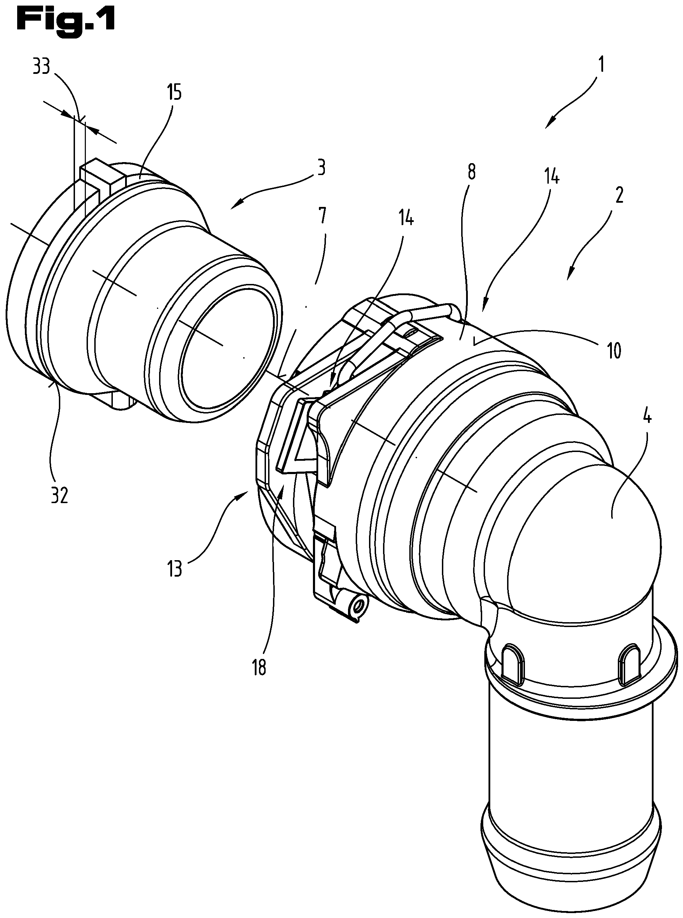

Fig. 1 zeigt eine perspektivische Ansicht einer Steckerbaugruppe 1 mit einem Steckverbinder 2. Weiters ist in Fig. 1 schematisch ein Gegensteckverbinder 3 dargestellt, welcher mit der Steckerbaugruppe 1 verbindbar ist. In der Ansicht nach Fig. 1 ist der Gegensteckverbinder 3 nicht in den Steckverbinder 2 eingesteckt. Das Zusammenwirken zwischen Steckerbaugruppe 1 und einem Gegensteckverbinder 3 ist in der AT 509 196 B1 hinlänglich beschrieben.

Weiters ist schematisch ein Rohr 4 dargestellt, an welches der Steckverbinder 2 gekoppelt sein kann. Das Rohr 4 kann beispielsweise ein starres Element, wie etwa ein Kunststoffrohr sein. In einer andern Ausführungsvariante kann das Rohr 4 als flexible Leitung aus einem Gummiwerkstoff ausgebildet sein.

Der Steckverbinder 2 umfasst einen Verbinderkörper 5, welcher vorzugsweise als Spritzgussteil, insbesondere aus einem Kunststoffwerkstoff gebildet ist.

Wie aus Fig. 1 ersichtlich, kann vorgesehen sein, dass das Rohr 4 einteilig an den Verbinderkörper 5 angeformt ist.

Die Steckerbaugruppe 1 wird vorzugsweise in einem Kraftfahrzeug, insbesondere in einem straßengebundenen Kraftfahrzeug mit Verbrennungsmotor, wie etwa einem PKW oder einem LKW eingesetzt.

Natürlich ist es auch denkbar, dass die Steckerbaugruppe 1 in einer sonstigen Anwendung, insbesondere einer sonstigen Anwendung in einem Verbrennungsmotor verwendet wird. Dies kann beispielsweise der Einsatz der Steckerbaugruppe 1 in einem stationären Aggregat, in einem Schiffsmotor, in einem Flugzeugmotor, in einer Baumaschine usw. sein.

Im Speziellen kann die Steckerbaugruppe 1 zum Verbinden verschiedener Bauteile der Frischluftzuführung zum Verbrennungsmotor eingesetzt werden. Beispielsweise kann vorgesehen sein, dass der Steckverbinder 2 mit dem entsprechenden Gegensteckverbinder 3 zur Verbindung zweier Teile im Ansaugbereich eines Turboladers vorgesehen ist. Weiters kann beispielsweise auch vorgesehen sein, dass eine derartige Steckerbaugruppe 1 in der vom Turbolader abgehenden Druckseite zur Verbindung zweier Bauteile eingesetzt wird. Weiters ist es auch denkbar, dass die Steckerbaugruppe 1 bei wasserführenden Bauteilen, wie etwa Kühlmittelschläuchen, insbesondere in einem Verbrennungsmotor eingesetzt wird.

Wie aus Fig. 1 weiters ersichtlich, ist vorgesehen, dass ein Arretierungselement 6 zum Sichern des Steckverbinders 2 und des Gegensteckverbinders 3 zueinander vorgesehen ist.

Das Arretierungselement 6 ist derart konstruiert, dass es leicht aktiviert und deaktiviert werden kann, sodass der Steckverbinder 2 und der Gegensteckverbinder 3 bedarfsweise voneinander getrennt bzw. miteinander verbunden werden können.

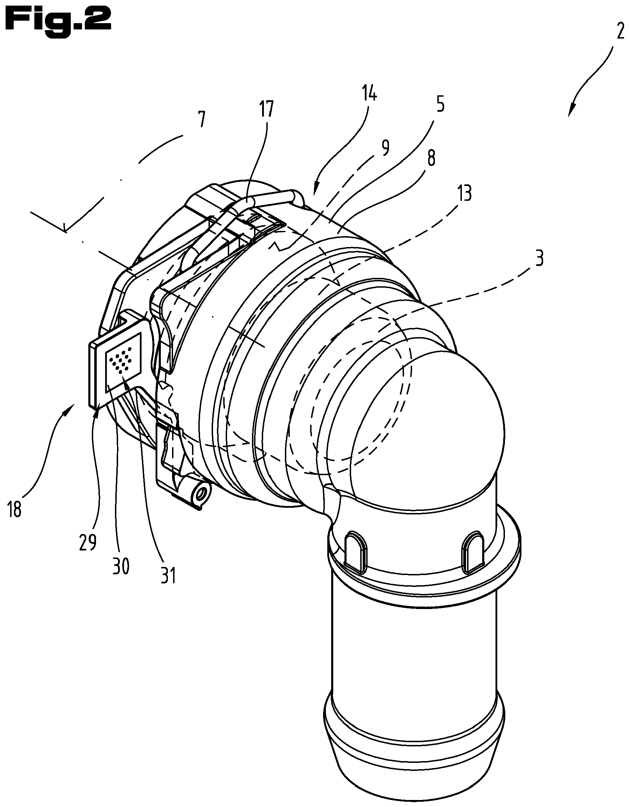

Fig. 2 zeigt eine weitere perspektivische Ansicht der Steckerbaugruppe 1, wobei in der Darstellung nach Fig. 2 der Gegensteckverbinder 3 in den Steckverbinder 2 eingesteckt ist.

Wie aus Fig. 2 ersichtlich, kann das Arretierungselement 6 in eine Raststellung gebracht werden, in welcher der Steckverbinder 2 und der Gegensteckverbinder 3 zueinander gesichert sind.

Weiters kann das Arretierungselement 6 in eine Freigabestellung gebracht werden, in welcher der Gegensteckverbinder 3 in den Steckverbinder 2 eingesetzt oder aus diesem herausgenommen werden kann. Insbesondere kann vorgesehen sein, dass das Arretierungselement 6 in Form eines Federelementes ausgebildet ist.

Wie aus Fig. 1 ersichtlich, kann vorgesehen sein, dass der Gegensteckverbinder entlang einer Längsachse 7 des Steckverbinders 2 in diesen einsteckbar ist.

Wie in Fig. 1 ersichtlich, ist am Verbinderkörper 5 ein erster Mantelabschnitt 8 ausgebildet, welcher die zentrale Längsachse 7 des Steckverbinders 2 hülsenförmig umgibt. Mit anderen Worten ausgedrückt, kann der erste Mantelabschnitt 8 ein rotationssymmetrischer Hohlzylinder sein.

Der erste Mantelabschnitt 8 weist eine innenliegende Mantelfläche 9 und eine außenliegende Mantelfläche 10 auf.

Im Bereich des ersten Mantelabschnittes 8 weist der Steckverbinder 2 einen Aufnahmeraum 13 auf. Der Aufnahmeraum 13 wird vom ersten Mantelabschnitt 8 umgeben und dient zur Aufnahme eines Teils des Gegensteckverbinders 3.

Der Verbinderkörper 5 weist mehrere, in Umfangsrichtung voneinander beabstandete Durchtrittsöffnungen 14 auf, welche den ersten Mantelabschnitt 8 durchdringen. In der Raststellung des Arretierungselementes 6, welche dieses im eingesteckten und verrasteten Zustand einnimmt, ragt das Arretierungselement 6 durch die jeweilige Durchtrittsöffnung 14 in den Aufnahmeraum 13. Hierbei wirkt das Arretierungselement 6 mit einer Sicherungsnut 15 des Gegensteckverbinders 3 zusammen. Insbesondere ragt in der Raststellung des Arretierungselementes 6 das Arretierungselement 6 durch die Durchtrittsöffnungen 14 hindurch in die Sicherungsnut 15 des Gegensteckverbinders 3 hinein.

Darüber hinaus kann vorgesehen sein, dass das Arretierungselement 6 einen Haltebereich 17 aufweist, an welchem es gegriffen werden kann, um in den Verbinderkörper 5 eingesetzt werden zu können und zwischen der Raststellung und der Freigabestellung bewegt werden zu können.

Wenn sich das Arretierungselement 6 in seiner Raststellung befindet ragen die Rastbereiche 16 in den Aufnahmeraum 13 und der Gegensteckverbinder 3 ist relativ zum Steckverbinder 2 axial gesichert. Insbesondere ist hierbei vorgesehen, dass die Rastbereiche 16 des Arretierungselementes 6 durch die Durchtrittsöffnungen 14 hindurch in die Sicherungsnut 15 des Gegensteckverbinders 3 hineinragen. Wenn sich das Arretierungselement 6 in seiner Freigabestellung befindet ragen die Rastbereiche 16 nicht in den Aufnahmeraum 13 und der Gegensteckverbinder 3 ist relativ zum Steckverbinder 2 axial verschiebbar.

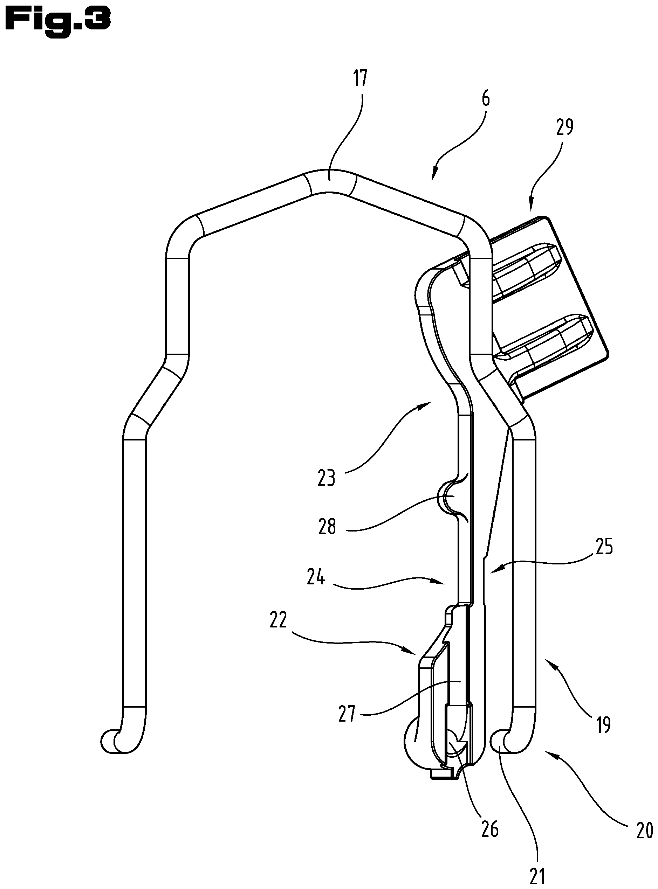

Fig. 3 zeigt eine perspektivische Ansicht des Arretierungselementes 6 und eines am Arretierungselement 6 zu befestigendes Anzeigeelement 18, welches zur Signalisierung dient, ob das Arretierungselement 6 korrekt arretiert ist.

Wie aus Fig. 3 ersichtlich, kann vorgesehen sein, dass das Arretierungselement 6 einen ersten Schenkel 19 aufweist, wobei an einem ersten Längsende 20 des ersten Schenkels 19 ein 90°-Stück 21 angeordnet ist.

Wie aus Fig. 3 weiters ersichtlich, kann vorgesehen sein, dass das Anzeigeelement 18 einen ersten Teilabschnitt 22 und einen zweiten Teilabschnitt 23 aufweist, wobei zwischen dem ersten Teilabschnitt 22 und dem zweiten Teilabschnitt 23 ein Federabschnitt 24 ausgebildet ist.

Insbesondere kann vorgesehen sein, dass der Federabschnitt 24 eine Verjüngung 25 im Querschnitt aufweist.

Durch den Federabschnitt 24 sind der erste Teilabschnitt 22 und der zweite Teilabschnitt 23 relativ zueinander beweg bzw. verkippbar. Durch die Relativbewegbarkeit des ersten Teilabschnittes 22 und des zweiten Teilabschnittes 23 relativ zueinander kann eine Anzeige der korrekten Arretierung des Arretierungselementes 6 erreicht werden.

Wie aus Fig. 3 weiters ersichtlich, kann vorgesehen sein, dass der erste Teilabschnitt 22 des Anzeigeelementes 18 eine Aufnahmebohrung 26 aufweist, welche zur Aufnahme des 90°-Stückes 21 des Arretierungselementes 6 dient. Insbesondere kann das 90°-Stück 21 des Arretierungselementes 6 in die Aufnahmebohrung 26 eingesteckt sein, um das Anzeigeelement 18 an das Arretierungselement 6 koppeln zu können.

Wie aus Fig. 3 weiters ersichtlich, kann vorgesehen sein, dass der erste Teilabschnitt 22 des Anzeigeelementes 18 eine Aufnahmenut 27 aufweist, welche zur Aufnahme des ersten Schenkels 19 des Arretierungselementes 6 dient. Insbesondere ist der direkt an das 90°-Stück 21 anschließende Teil des ersten Schenkels 19 in der Aufnahmenut 27 aufgenommen. Durch die Aufnahmebohrung 26 und die Aufnahmenut 27 kann erreicht werden, dass der erste Teilabschnitt 22 des Anzeigeelementes 18 verdrehstarr mit dem ersten Schenkel 19 des Arretierungselementes 6 gekoppelt ist.

Weiters kann vorgesehen sein, dass am zweiten Teilabschnitt 23 des Anzeigeelementes 18 eine Anlagenase 28 ausgebildet ist, welche zum Aktivieren des Anzeigeelementes 18 dient.

Wie aus Fig. 3 ersichtlich, ist am Anzeigeelement 18 eine Anzeigefläche 29 ausgebildet, wobei in der Fig. 3 die Rückseite der Anzeigefläche 29 ersichtlich ist. In Fig. 2 ist die Anzeigefläche 29 von dessen Vorderseite sichtbar.

Wie aus Fig. 2 weiters ersichtlich, kann vorgesehen sein, dass die Anzeigefläche 29 des Anzeigeelementes 18 gleichzeitig als Codierungsfläche 30 dient, an welcher ein Code 31 angeordnet ist.

Die Anzeigefläche 29 kann eine Signalisierungsfarbe, wie etwa eine grüne Farbe, aufweisen, um signalisieren zu können, dass das Arretierungselement 6 korrekt arretiert ist. Alternativ oder zusätzlich ist es auch denkbar, dass an der Anzeigefläche 29 ein Schriftzug angeordnet ist, oder dass die Anzeigefläche 29 entsprechend von einem Schriftzug durchsetzt ist, welche ebenfalls das korrekte arretieren des Arretierungselementes 6 signalisiert.

In der Darstellung nach Fig. 2 befindet sich das Anzeigeelement 18 in einer Anzeigeposition, welche signalisiert, dass der Gegensteckverbinder 3 korrekt in den Steckverbinder 2 eingesteckt ist.

In der Darstellung nach Fig. 1 befindet sich das Anzeigeelement 18 in einer Ruheposition, welche signalisiert, dass der Gegensteckverbinder 3 entweder gar nicht, oder nicht korrekt in den Steckverbinder 2 eingesteckt ist.

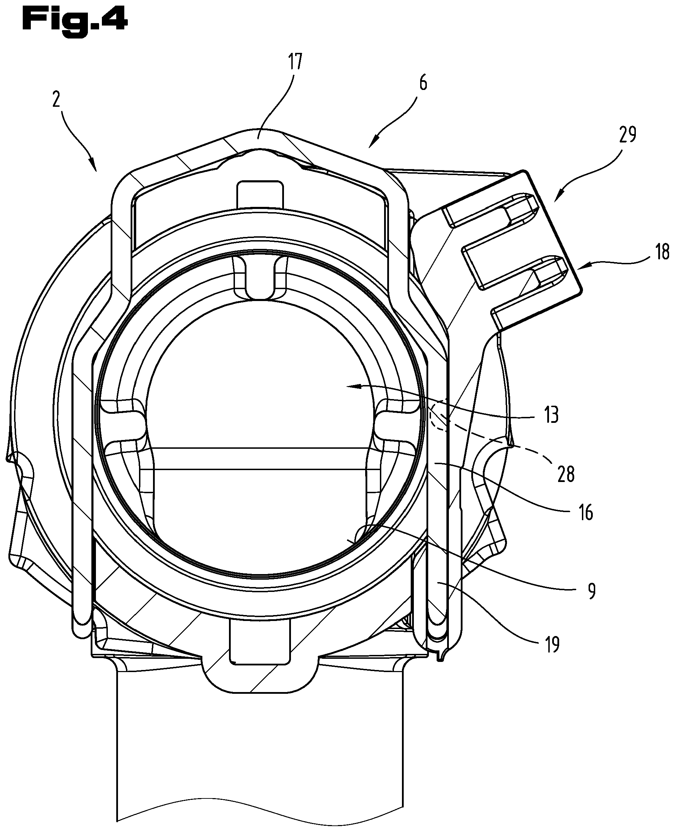

Die Funktionalität des Anzeigeelementes 18 bzw. die Überleitung von der Ruheposition in die Anzeigeposition des Anzeigeelementes 18 wird anhand der Figuren 4 bis 7 näher erklärt.

Fig. 4 zeigt eine Querschnittdarstellung des Steckverbinders 2, wobei sich das Anzeigeelement 18 in seiner Ruheposition befindet.

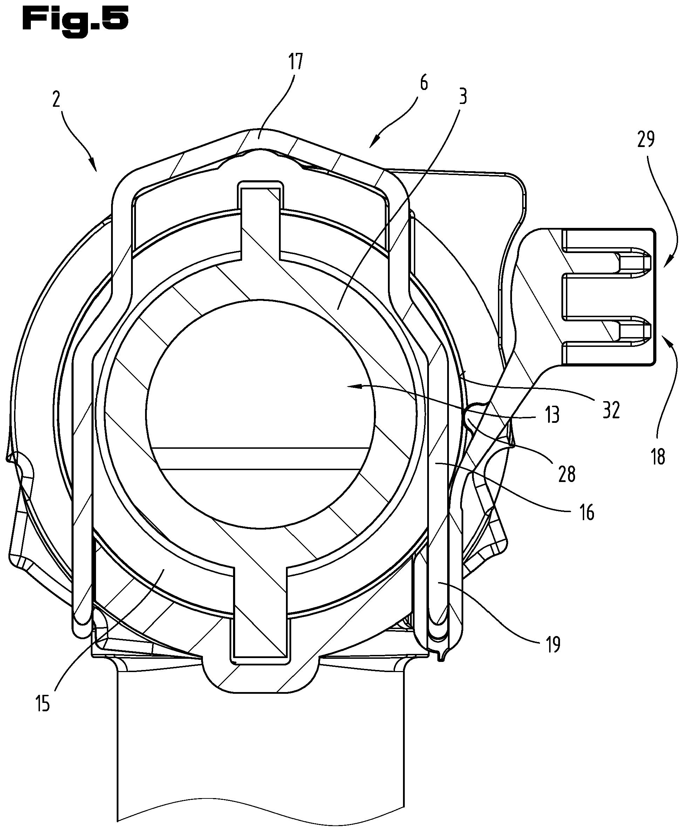

Fig. 5 zeigt eine Querschnittdarstellung des Steckverbinders 2 mit dem darin eingesteckten Gegensteckverbinder, wobei sich das Anzeigeelement 18 in seiner Anzeigeposition befindet.

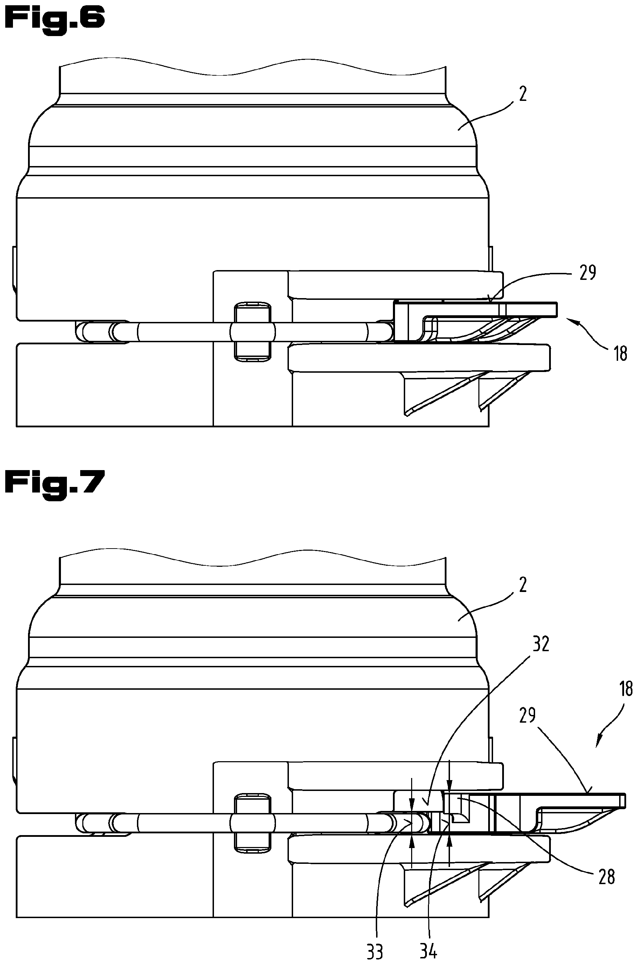

Fig. 6 zeigt eine Seitenansicht des Steckverbinders 2, wobei sich das Anzeigeelement 18 in seiner Ruheposition befindet.

Fig. 7 zeigt eine Seitenansicht des Steckverbinders 2 mit dem darin eingesteckten Gegensteckverbinder, wobei sich das Anzeigeelement 18 in seiner Anzeigeposition befindet.

Wie aus den Figuren 4 und 6 ersichtlich, befindet sich das Anzeigeelement 18 in seiner Ruheposition, wenn der Gegensteckverbinder 3 noch nicht in den Steckverbinder 2 eingesteckt ist.

Beim Zusammenbau wird der Gegensteckverbinder 3 nun in den Steckverbinder 2 eingesteckt. Zur axialen Sicherung des Gegensteckverbinders 3 im Steckverbinder 2 wird das Arretierungselement 6 in die Sicherungsnut 15 eingebracht. Beim korrekten Einbringen des Arretierungselementes 6 in die Sicherungsnut 15, liegt ein Teil des Anzeigeelementes 18, insbesondere die Anlagenase 28, an einem Außenbereich 32 des Gegensteckverbinders 3 an, wodurch der zweite Teilabschnitt 23 des Anzeigeelementes 18 relativ zum ersten Teilabschnitt 22 des Anzeigeelementes 18 nach außen gedrückt wird und dadurch die Anzeigefläche 29 des Anzeigeelementes 18 in eine Anzeigeposition gedrückt wird. In der Anzeigeposition des Anzeigeelementes 18 ist die Anzeigefläche 29 von außen sichtbar, wodurch ein korrektes einrasten des Arretierungselementes 6 signalisiert wird.

Um diese Funktionalität zu erreichen, kann vorgesehen sein, dass eine Anzeigeelementbreite 34 des Anzeigeelementes 18 im Bereich der Anlagenase 28 größer ist, als eine Nutbreite 33 der Sicherungsnut 15. Dadurch wird das Anzeigeelement 18 in eine Anzeigeposition gedrückt.

Alternativ dazu kann die Funktionalität auch erreicht werden, wenn das Anzeigeelement 18 im Bereich der Anlagenase 28 versetzt zur Sicherungsnut 15 angeordnet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steckerbaugruppe | 28 29 | Anlagenase Anzeigefläche |
| 2 | Steckverbinder | 30 | Codierungsfläche |
| 3 | Gegensteckverbinder | 31 | Code |
| 4 | Rohr | 32 | Außenbereich |
| 5 | Verbinderkörper | 33 | Nutbreite |
| 6 | Arretierungselement | 34 | Anzeigeelementbreite |
| 7 | Längsachse des Steckverbinders | | |
| 8 | erster Mantelabschnitt | | |
| 9 | innenliegende Mantelfläche | | |
| 10 | außenliegende Mantelfläche | | |
| 11 | Dichtungsaufnahme Steckverbinder | | |
| 12 | Ringraum | | |
| 13 | Aufnahmeraum | | |
| 14 | Durchtrittsöffnung | | |
| 15 | Sicherungsnut | | |
| 16 | Rastbereich | | |
| 17 | Haltebereich | | |
| 18 | Anzeigeelement | | |
| 19 | erster Schenkel | | |
| 20 | erstes Längsende Arretierungselement | | |
| 21 | 90°-Stück | | |
| 22 | erster Teilabschnitt | | |
| 23 | zweiter Teilabschnitt | | |
| 24 | Federabschnitt | | |
| 25 | Verjüngung | | |
| 26 | Aufnahmebohrung | | |
| 27 | Aufnahmenut | | |

## Patentansprüche

1. Steckverbinder (2) zum Verbinden von Leitungen für flüssige oder gasförmige Medien, umfassend
- einen Verbinderkörper (5), welcher zumindest einen ersten Mantelabschnitt (8) aufweist, welcher einen Aufnahmeraum (13) zur Aufnahme eines Teils eines Gegensteckverbinders (3) bildet, wobei im ersten Mantelabschnitt (8) zumindest zwei Durchtrittsöffnungen (14) ausgebildet sind;
- ein Arretierungselement (6), welches zum Sichern des Steckverbinders (2) relativ zum Gegensteckverbinder (3) vorgesehen ist, wobei die Durchtrittsöffnungen (14) im Verbinderkörper (5) zur Aufnahme des Arretierungselementes (6) dienen,
wobei ein Anzeigeelement (18) ausgebildet ist, welches eine Anzeigefläche (29) aufweist, wobei das Anzeigeelement (18) einen ersten Teilabschnitt (22) und einen zweiten Teilabschnitt (23) aufweist, wobei der erste Teilabschnitt (22) und der zweite Teilabschnitt (23) durch einen Federabschnitt (24) flexibel miteinander gekoppelt sind, **dadurch gekennzeichnet, dass** der erste Teilabschnitt (22) fest mit dem Arretierungselement (6) verbunden ist und die Anzeigefläche (29) am zweiten Teilabschnitt (23) ausgebildet ist, wobei das Anzeigeelement (18) derart ausgebildet ist, dass in einer Arretierposition des Arretierungselementes (6), und gleichzeitig richtiger Positionierung des Gegensteckverbinders (3), der zweite Teilabschnitt (23) relativ zum ersten Teilabschnitt (22) verformt ist, sodass die Anzeigefläche (29) in eine Anzeigeposition gedrückt ist.

2. Steckverbinder (2) nach Anspruch 1, **dadurch gekennzeichnet, dass** das Arretierungselement (6) in der Arretierposition in eine Sicherungsnut (15) des Gegensteckverbinders (3) eingreift, wobei der zweite Teilabschnitt (23) des Anzeigeelementes (18) derart ausgebildet ist, dass er an einem Außenbereich (32) der Sicherungsnut (15) anliegt, so dass die Anzeigefläche (29) in die Anzeigeposition gedrängt ist, wenn alle Rastbereiche (16) des Arretierungselementes (6) in die Sicherungsnut (15) des Gegensteckverbinders (3) eingreifen.

3. Steckverbinder (2) nach Anspruch 2, **dadurch gekennzeichnet, dass** am zweiten Teilabschnitt (23) des Anzeigeelementes (18) eine Anlagenase (28) ausgebildet ist, welche zur Anlage am Außenbereich (32) der Sicherungsnut (15) dient.

4. Steckverbinder (2) nach Anspruch 3, **dadurch gekennzeichnet, dass** eine Anzeigeelementbreite (34) des Anzeigeelementes (18) im Bereich der Anlagenase (28) größer ist, als eine Nutbreite (33) der Sicherungsnut (15) oder dass das Anzeigeelement (18) im Bereich der Anlagenase (28) versetzt zur Sicherungsnut (15) angeordnet ist.

5. Steckverbinder (2) nach einem der vorhergehenden Ansprüche, **dadurch gekennzeichnet, dass** der erste Teilabschnitt (22) des Anzeigeelementes (18) an einem ersten Längsende (20) des Arretierungselementes (6) aufgenommen ist.

6. Steckverbinder (2) nach Anspruch 5, **dadurch gekennzeichnet, dass** am ersten Längsende (20) des Arretierungselementes (6) ein 90°-Stück (21) ausgebildet ist, wobei der erste Teilabschnitt (22) des Anzeigeelementes (18) eine Aufnahmebohrung (26) aufweist, welche zur Aufnahme des 90°-Stückes (21) dient und wobei der erste Teilabschnitt (22) des Anzeigeelementes (18) eine Aufnahmenut (27) aufweist, welche zur Aufnahme eines ersten Schenkels (19) des Arretierungselementes (6) dient.

7. Steckverbinder (2) nach einem der vorhergehenden Ansprüche, **dadurch gekennzeichnet, dass** das Anzeigeelement (18) eine Codierungsfläche (30) aufweist, welche in der Anzeigeposition des Anzeigeelementes (18) sichtbar und in der Ruheposition des Anzeigeelementes (18) zumindest teilweise verdeckt ist, wobei die Codierungsfläche (30) einen maschinenlesbaren Code (31), wie etwa einen Data Matrix Code, aufweist.

8. Steckverbinder (2) nach einem der vorhergehenden Ansprüche, **dadurch gekennzeichnet, dass** der Federabschnitt (24) eine Verjüngung (25) aufweist.

9. Steckverbinder (2) nach einem der vorhergehenden Ansprüche, **dadurch gekennzeichnet, dass** das Anzeigeelement (18) als einteiliges Spritzgussteil ausgebildet ist.

10. Verfahren zum Herstellen einer Steckverbindung zwischen einem Steckverbinder (2) zum Verbinden von Leitungen für flüssige oder gasförmige Medien und einem Gegensteckverbinder (3), umfassend die Verfahrensschritte:
- bereitstellen des Steckverbinders (2) mit einem Verbinderkörper (5), welcher zumindest einen ersten Mantelabschnitt (8) aufweist, welcher einen Aufnahmeraum (13) zur Aufnahme eines Teils des Gegensteckverbinders (3) bildet, wobei im ersten Mantelabschnitt (8) zumindest zwei Durchtrittsöffnungen (14) ausgebildet sind und einem Arretierungselement (6), welches zum Sichern des Steckverbinders (2) relativ zum Gegensteckverbinder (3) vorgesehen ist, wobei die Durchtrittsöffnungen (14) im ersten Mantelabschnitt (8) des Verbinderkörpers (5) zur Aufnahme des Arretierungselementes (6) dienen;
- bereitstellen des Gegensteckverbinders (3);
- einstecken des Gegensteckverbinders (3) in den Aufnahmeraum (13) des Steckverbinders (2);
- sichern des Gegensteckverbinders (3) im Aufnahmeraum (13) des Steckverbinders (2) mittels des Arretierungselementes (6),
wobei ein Anzeigeelement (18) ausgebildet ist, welches eine Anzeigefläche (29) aufweist, wobei das Anzeigeelement (18) einen ersten Teilabschnitt (22) und einen zweiten Teilabschnitt (23) aufweist, wobei der erste Teilabschnitt (22) und der zweite Teilabschnitt (23) durch einen Federabschnitt (24) flexibel miteinander gekoppelt sind, **dadurch gekennzeichnet, dass** der erste Teilabschnitt (22) fest mit dem Arretierungselement (6) verbunden ist und die Anzeigefläche (29) am zweiten Teilabschnitt (23) ausgebildet ist, wobei beim Einrasten des Arretierungselementes (6) in einer Arretierposition der zweite Teilabschnitt (23) des Anzeigeelementes (18) relativ zum ersten Teilabschnitt (22) des Anzeigeelementes (18) verformt wird, sodass die Anzeigefläche (29) in eine Anzeigeposition gedrückt wird.

## Claims

1. A plug connector (2) for connecting pipes for liquid or gaseous media, comprising
- a connector body (5), which has at least a first casing section (8), which forms a receiving space (13) for receiving a part of the mating plug connector (3), wherein at least two passages (14) are formed in the first casing section (8);
- a locking element (6), which is provided for securing the plug connector (2) relative to the mating plug connector (3), wherein the passages (14) in the connector body (5) serve to receive the locking element (6),
wherein an indicator element (18) is formed, which has an indicator surface (29), wherein the indicator element (18) has a first partial section (22) and a second partial section (23), wherein the first partial section (22) and the second partial section (23) are flexibly coupled to one another by means of a spring section (24), **characterized in that** the first partial section (22) is fixedly connected to the locking element (6), and the indicator surface (29) is formed on the second partial section (23), wherein the indicator element (18) is formed such that, in a locking position of the locking element (6) and simultaneous correct positioning of the mating plug connector (3), the second partial section (23) is deformed relative to the first partial section (22), so that the indicator surface (29) is pushed into an indicator position.

2. The plug connector (2) according to claim 1, **characterized in that**, in the locking position, the locking element (6) engages with a securing groove (15) of the mating plug connector (3), wherein the second partial section (23) of the indicator element (18) is formed such that it abuts an outer region (32) of the securing groove (15), so that the indicator surface (29) is urged into the indicator position, when all latching regions (16) of the locking element (6) engage with the securing groove (15) of the mating plug connector (3).

3. The plug connector (2) according to claim 2, **characterized in that** a contact lug (28) is formed on the second partial section (23) of the indicator element (18), which contact lug (28) serves to contact the outer region (32) of the securing groove (15).

4. The plug connector (2) according to claim 3, **characterized in that** an indicator element width (34) of the indicator element (18) is greater in the region of the contact lug (28) than a groove width (33) of the securing groove (15), or that the indicator element (18) is arranged offset to the securing groove (15) in the region of the contact lug (28).

5. The plug connector (2) according to one of the preceding claims, **characterized in that** the first partial section (22) of the indicator element (18) is received at a first longitudinal end (20) of the locking element (6).

6. The plug connector (2) according to claim 5, **characterized in that** a 90° piece (21) is formed on the first longitudinal end (20) of the locking element (6), wherein the first partial section (22) of the indicator element (18) has a receiving bore (26), which serves to receive the 90° piece (21), and wherein the first partial section (22) of the indicator element (18) has a receiving groove (27), which serves to receive a first limb (19) of the locking element (6).

7. The plug connector (2) according to one of the preceding claims, **characterized in that** the indicator element (18) has a coding surface (30), which is visible in the indicator position of the indicator element (18) and, in the rest position of the indicator element (18), is at least partially concealed, wherein the coding surface (30) has a machine-readable code (31), such as a data matrix code.

8. The plug connector (2) according to one of the preceding claims, **characterized in that** the spring section (24) has a taper (25).

9. The plug connector (2) according to one of the preceding claims, **characterized in that** the indicator element (18) is formed as an integral injection-molded part.

10. A method for establishing a plug connection between a plug connector (2) for connecting pipes for liquid or gaseous media and a mating plug connector (3), comprising the method steps:
- providing the plug connector (2) with a connector body (5), which has at least one first casing section (8), which forms a receiving space (13) for receiving a part of the mating plug connector (3), wherein at least two passages (14) are formed in the first casing section (8), and a locking element (6), which is provided for securing the plug connector (2) relative to the mating plug connector (3), wherein the passages (14) in the first casing section(8) of the connector body (5) serve to receive the locking element (6);
- providing the mating plug connector (3);
- plugging the mating plug connector (3) into the receiving space (13) of the plug connector (2);
- securing the mating plug connector (3) in the receiving space (13) of the plug connector (2) by means of the locking element (6),
wherein an indicator element (18) is formed, which has an indicator surface (29), wherein the indicator element (18) has a first partial section (22) and a second partial section (23), wherein the first partial section (22) and the second partial section (23) are flexibly coupled to one another by means of a spring section (24), **characterized in that** the first partial section (22) is fixedly connected to the locking element (6), and the indicator surface (29) is formed on the second partial section (23), wherein, when the locking element (6) latches in a locking position, the second partial section (23) of the indicator element (18) is deformed relative to the first partial section (22) of the indicator element (18), so that the indicator surface (29) is pushed into an indicator position.

## Revendications

1. Connecteur enfichable (2) pour le raccordement de conduites pour des milieux liquides ou gazeux, comprenant
- un corps de connecteur (5), qui comprend au moins une première portion d'enveloppe (8), qui constitue un espace de logement (13) pour le logement d'une partie d'un contre-connecteur enfichable (3), dans lequel, dans la première portion d'enveloppe (8), sont réalisées au moins deux ouvertures de passage (14) ;
- un élément d'arrêt (6), qui est conçu pour la sécurisation du connecteur enfichable (2) par rapport au contre-connecteur enfichable (3), dans lequel les ouvertures de passage (14) dans le corps du connecteur (5) permettent de loger l'élément d'arrêt (6),
dans lequel un élément d'affichage (18) est prévu, qui présente une surface d'affichage (29), dans lequel l'élément d'affichage (18) comprend une première portion (22) et une deuxième portion (23), dans lequel la première portion (22) et la deuxième portion (23) sont couplées entre elles de manière flexible à l'aide d'une portion à ressort (24), **caractérisé en ce que** la première portion (22) est reliée fermement avec l'élément d'arrêt (6) et la surface d'affichage (29) est disposée sur la deuxième portion (23), dans lequel l'élément d'affichage (18) est conçu de sorte que, dans une position d'arrêt de l'élément d'arrêt (6) et simultanément lors d'un positionnement correct du contre-connecteur enfichable (3), la deuxième portion (23) est déformée par rapport à la première portion (22), de sorte que la surface d'affichage (29) est comprimée dans une position d'affichage.

2. Connecteur enfichable (2) selon la revendication 1, **caractérisé en ce que** l'élément d'arrêt (6) s'emboîte, dans la position d'arrêt, dans une rainure de sécurisation (15) du contre-connecteur enfichable (3), dans lequel la deuxième portion (23) de l'élément d'affichage (18) est conçue de façon à s'appuyer contre une partie externe (32) de la rainure de sécurisation (15), de sorte que la surface d'affichage (29) soit comprimée vers la position d'affichage lorsque toutes les parties d'encliquetage (16) de l'élément d'arrêt (6) s'emboîtent dans la rainure de sécurisation (15) du contre-connecteur enfichable (3).

3. Connecteur enfichable (2) selon la revendication 2, **caractérisé en ce que**, sur la deuxième portion (23) de l'élément d'affichage (18), est réalisé un embout d'appui (28) qui permet un appui contre la partie externe (32) de la rainure de sécurisation (15).

4. Connecteur enfichable (2) selon la revendication 3, **caractérisé en ce qu'**une largeur d'élément d'affichage (34) de l'élément d'affichage (18) au niveau de l'embout d'appui (28) est supérieure à une largeur de rainure (33) de la rainure de sécurisation (15) ou **en ce que** l'élément d'affichage (18) est disposé au niveau de l'embout d'appui (28) de manière décalée par rapport à la rainure de sécurisation (15).

5. Connecteur enfichable (2) selon l'une des revendications précédentes, **caractérisé en ce que** la première portion (22) de l'élément d'affichage (18) est logé au niveau d'une première extrémité longitudinale (20) de l'élément d'arrêt (6).

6. Connecteur enfichable (2) selon la revendication 5, **caractérisé en ce que**, sur la première extrémité longitudinale (20) de l'élément d'arrêt (6) est prévue une pièce à 90° (21), dans lequel la première portion (22) de l'élément d'affichage (18) présente un alésage de logement (26) qui permet de loger la pièce à 90° (21) et dans lequel la première portion (22) de l'élément d'affichage (18) présente une rainure de logement (27) qui permet de loger une première branche (19) de l'élément d'arrêt (6).

7. Connecteur enfichable (2) selon l'une des revendications précédentes, **caractérisé en ce que** l'élément d'affichage (18) présente une surface de codage (30) qui est visible dans la position d'affichage de l'élément d'affichage (18) et qui est au moins partiellement recouverte dans la position de repos de l'élément d'affichage (18), dans lequel la surface de codage (30) comprend un code lisible par une machine (31), par exemple un Data Matrix Code.

8. Connecteur enfichable (2) selon l'une des revendications précédentes, **caractérisé en ce que** la portion à ressort (24) présente un rétrécissement (25).

9. Connecteur enfichable (2) selon l'une des revendications précédentes, **caractérisé en ce que** l'élément d'affichage (18) est conçu comme une pièce moulée par injection d'une seule pièce.

10. Procédé de fabrication d'une connexion enfichable entre un connecteur enfichable (2) pour le raccordement de conduites pour des milieux liquides ou gazeux, et un contre-connecteur enfichable (3), comprenant les étapes suivantes :
- mise à disposition du connecteur enfichable (2) avec un corps de connecteur (5), qui comprend au moins une première portion d'enveloppe (8), qui constitue un espace de logement (13) pour le logement d'une partie du contre-connecteur enfichable (3), dans lequel, dans la première portion d'enveloppe (8), sont réalisées au moins deux ouvertures de passage (14) et un élément d'arrêt (6), qui est conçu pour la sécurisation du connecteur enfichable (2) par rapport au contre-connecteur enfichable (3), dans lequel les ouvertures de passage (14) dans la première portion d'enveloppe (8) du corps du connecteur (5) permettent de loger l'élément d'arrêt (6) ;
- mise à disposition du contre-connecteur enfichable (3) ;
- insertion du contre-connecteur enfichable (3) dans l'espace de logement (13) du connecteur enfichable (2) ;
- blocage du contre-connecteur enfichable (3) dans l'espace de logement (13) du connecteur enfichable (2) à l'aide de l'élément d'arrêt (6) ;
dans lequel un élément d'affichage (18) est prévu, qui présente une surface d'affichage (29), dans lequel l'élément d'affichage (18) comprend une première portion (22) et une deuxième portion (23), dans lequel la première portion (22) et la deuxième portion (23) sont couplées entre elles de manière flexible à l'aide d'une portion à ressort (24), **caractérisé en ce que** la première portion (22) est reliée fermement avec l'élément d'arrêt (6) et la surface d'affichage (29) est disposée sur la deuxième portion (23), dans lequel, lors de l'encliquetage de l'élément d'arrêt (6) dans une position d'arrêt, la deuxième portion (23) de l'élément d'affichage (18) est déformée par rapport à la première portion (22) de l'élément d'affichage (18), de sorte que la surface d'affichage (29) est comprimée dans une position d'affichage.
